# EUROPEAN PATENT APPLICATION

(11) **EP 2 547 086 A2**
(43) Date of publication of application: **16.01.2013**
(21) Application number: 12175972.4
(22) Date of filing: 11.07.2012
(51) Int. Cl.: H04N 1/40

(54) **Host apparatus, image scanning apparatus, image scanning methods thereof and computer-readable recording medium**

(30) Priority: 13.07.2011 KR 20110069208
(71) Applicant: Samsung Electronics Co., Ltd., Suwon-si, Gyeonggi-do, 443-742 (KR)
(72) Inventor: Lee, Jae-Kyu, Suwon-si, Gyeonggi-do 443-742 (KR)
(74) Representative: Misselbrook, Paul

(57) **Abstract**

There is provided a host apparatus. The host apparatus includes: a display unit configured to display a user interface (UI) window for an image scanning apparatus. A control unit is configured to elevate and determine an optical scanning resolution of the image scanning apparatus according to Moire-related information. Using the Ul window a scanning resolution is input and a Moire removing function is selected. The image scanning apparatus is then controlled to perform a scanning operation according to the determined optical scanning resolution. A communication interface unit is configured to receive a scanned image. The scanned image is scanned with the optical scanning resolution in the image scanning apparatus. A filtering unit is configured to remove a halftoning screen pattern from the received scanned image. A sampling unit is configured to down-sample the filtered scanned image with the input scanning resolution.

## Description

### CROSS-REFERENCE TO RELATED APPLICATIONS

This application claims priority from Korean Patent Application No. 10-2011-0069208, filed on July 13, 2011, in the Korean Intellectual Property Office, the disclosure of which is incorporated herein by reference in its entirety.

### BACKGROUND

### 1. Field

Apparatuses and methods consistent with exemplary embodiments relate to a host apparatus, an image scanning apparatus, image scanning methods thereof, and a computer-readable recording medium, and more particularly, to a host apparatus, an image scanning apparatus, image scanning methods thereof, and a computer-readable recording medium which are configured to remove Moire of a low-resolution scanned image.

### 2. Description of the Related Art

Image scanning apparatuses are apparatuses which scan original images of texts, pictures, films, or the like and convert scanned images into digital data. At this time, the digital data may be displayed on a monitor of a computer or printed by a printer as an output image. As an example of the image scanning apparatuses, there are scanners, copiers, facsimiles, or multiple function peripherals (MFPs) which multiply implement functions thereof through one apparatus.

When the image scanning apparatuses scan printed texts such as newspapers or magazines with halftoning, a phenomenon on which periodic patterns which are not present in the printed texts are generated in scanned images occurs and is called Moire.

Since the image scanning apparatuses represent images with a binary level of two states according to output presence/absence of a dot differently from imaging apparatuses which represent images with multi levels. The image scanning apparatuses have to convert the images represented with the multi-levels into the image represented with the binary levels. The process of converting the multi-level image into the binary-level image is called the halftoning.

There are various methods of performing the halftoning and one of the methods of performing the halftoning is a screening halftoning. The screening halftoning method is a method of performing binarization by comparing gray values (0 to 255) of each pixel to be binarized with a preset screen.

The Moire pattern is represented by interferences between halftoning screen patterns of the text and sampling pixels of the image scanning apparatus. The Moire pattern occurs when a halftoning screen frequency of the text is larger than 1/2 of a scanning resolution of the image scanning apparatus. That is, when the halftoning screen frequency of the text is larger than 1/2 of the scanning resolution of the image scanning apparatus, a periodic pattern which is not present in the text is represented in the scanned image.

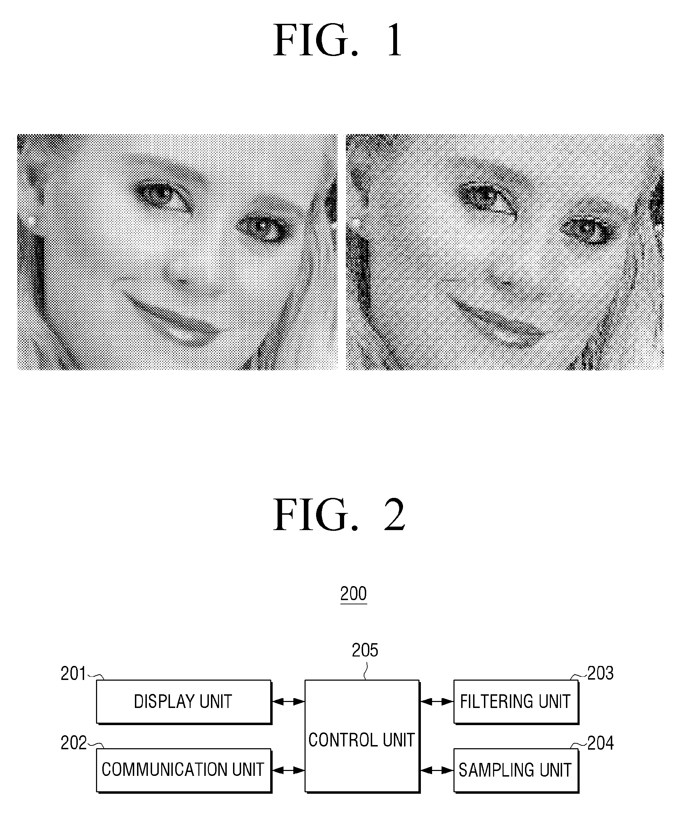

FIG. 1 is a view illustrating a text printed with halftoning and a scanned image in which the text printed with halftoning is scanned. The text printed with halftoning is illustrated in the left of FIG. 1 and the scanned image in which the text printed with halftoning is scanned is illustrated in the right of FIG. 1. It can be seen that the Moire pattern is presented in the right of FIG. 1. The Moire pattern occurs because the halftoning screen frequency of the text printed with halftoning is larger than 1/2 of the scanning resolution of the image scanning apparatus as described above.

In general, halftoning screen frequencies of a newspaper, a magazine, and a commercial print are about 85 lpi, about 133 lpi, and 175 lpi, respectively, but the halftoning screen frequencies thereof are not limited thereto. In recent years, with the development of print technology, a high-resolution halftoning screen tends to be used gradually.

To prevent Moire from occurring when scanning the text printed with halftoning, the text has to be scanned with a resolution two times or more the halftoning screen frequency of the text. To obtain Moire-free image, the text has to be scanned with a high resolution, for example, with 300 dpi or more in a newspaper or a magazine or 600 dpi in a commercial print. When a user selects a low scanning resolution in a scan application, the image scanning apparatus performs a scanning operation with a designated scanning resolution, performs a down-sampling operation with a scanning resolution input by the user, and outputs a low-resolution image to the scan application. When a text with halftoning is scanned, Moire occurs. To prevent Moire from occurring when the text printed with halftoning is scanned, the text printed with halftoning has to be scanned with a resolution two times or more the halftoning screen frequency of the text. However, when the text is scanned with a high scanning resolution of 300 dpi or more or with a scanning resolution of 600 dpi or more, an image size as well as a file size is increased. Therefore, the scanning resolution with about 150 to 200 dpi is generally used.

Thus, when a text having a halftoning screen frequency of 85 to 200 lpi is scanned with a resolution of 300 dpi or less, Moire frequently occurs. A video processing algorithm called Descreen is used to remove Moire from the final scanned image in the related art.

When removing Moire using a Descreen filter, a large capacity of a memory is used to process an image and a scanning time is increased.

In addition, the above-described method is used to remove Moire which has already occurred and thus it is difficult to restore the text in an original state.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments are to effectively prevent or remove Moire which can be generated when an image scanning apparatus scans a text with halftoning with a low resolution.

According to an aspect, there is provided a host apparatus. The host apparatus may include: a display unit configured to display a user interface (UI) window for an image scanning apparatus; a control unit configured to elevate and determine an optical scanning resolution of the image scanning apparatus according to Moire-related information when a scanning resolution is input and a Moire removing function is selected, in the UI window, and control the image scanning apparatus to perform a scanning operation according to the determined optical scanning resolution; a communication interface unit configured to receive a scanned image scanned with the optical scanning resolution in the image scanning apparatus; a filtering unit configured to remove a halftoning screen pattern from the received scanned image; and a sampling unit configured to down-sample the filtered scanned image with the input scanning resolution.

The Moire-related information may include the scanning resolution input through the UI window and the control unit may elevate the input scanning resolution and determine the elevated scanning resolution to the optical scanning resolution.

The control unit may elevate the input scanning resolution two times or more and determine the elevated scanning resolution to the optical scanning resolution.

The Moire-related information may include a halftoning frequency of a text input through the UI window and the control unit may elevate a text resolution corresponding to the input halftoning frequency and determine the elevated text resolution to the optical scanning resolution.

The Moire-related information may include a kind of text input through the UI window and the control unit may read information for an optical scanning resolution corresponding to the input kind of text from a data base in which pieces of information for optical scanning resolutions set to be different from each other according to kinds of texts are stored and determine the optical scanning resolution according to the read optical scanning resolution information.

The Moire-related information may include a Moire removal level input through the UI window and the control unit may determine the optical scanning resolution corresponding to the input Moire removal level.

According to another aspect, there is provided an image scanning apparatus. The image scanning apparatus may include: a UI unit configured to allow a Moire removing function for the image scanning apparatus to be selected; a control unit configured to elevate and determine an optical scanning resolution thereof according to Moire-related information when the Moire removing function is selected; a scanning unit configured to perform a scanning operation according to the determined optical scanning resolution; a filtering unit configured to a halftoning screen pattern from a scanned image scanned at the scanning unit; and a sampling unit configured to down-sample the filtered scanned image with a pre-input scanning resolution.

The Moire-related information may include the pre-input scanning resolution and the control unit may elevate the pre-input scanning resolution and determine the elevated scanning resolution to the optical scanning resolution.

The control unit may elevate the pre-input scanning resolution two times or more and determine the elevated scanning resolution to the optical scanning resolution.

The Moire-related information may include a halftoning frequency of a text input through the UI unit and the control unit may elevate a text resolution corresponding to the input halftoning frequency and determine the elevated text resolution to the optical scanning resolution.

The Moire-related information may include a kind of text input through the UI unit and the control unit may read information for an optical scanning resolution corresponding to the input kind of text from a data base in which pieces of information for optical scanning resolutions set to be different from each other according to kinds of texts are stored and determine the optical scanning resolution according to the read optical scanning resolution information.

The Moire-related information may include a Moire removal level input through the UI unit and the control unit may determine the optical scanning resolution corresponding to the input Moire removal level.

According to another aspect, there is provided an image scanning method of a host apparatus. The method may include: displaying a UI window for an image scanning apparatus; when a scanning resolution is input and a Moire removing function is selected, in the UI window, elevating and determining an optical scanning resolution of the image scanning apparatus according to Moire-related information; controlling the image scanning apparatus to perform a scanning operation according to the determined optical scanning resolution; receiving a scanned image scanned with the optical scanning resolution through the scanning operation; performing filtering to remove a halftoning screen pattern from the received scanned image; and down-sampling the filtered scanned image with the input scanning resolution.

The Moire-related information may include the scanning resolution input through the UI window and the elevating and determining may include elevating the input scanning resolution and determining the elevated scanning resolution to the optical scanning resolution.

The elevating and determining may include elevating the input scanning resolution two times or more and determining the elevated scanning resolution to the optical scanning resolution.

The Moire-related information may include a halftoning frequency of a text input through the UI window and the elevating and determining may include elevating a text resolution corresponding to the input halftoning frequency and determining the elevated text resolution to the optical scanning resolution.

The Moire-related information may include a kind of text input through the UI window and the elevating and determining may include reading information for an optical scanning resolution corresponding to the input kind of text from a data base in which pieces of information for optical scanning resolutions set to be different from each other according to kinds of texts are stored and determining the optical scanning resolution corresponding to the read optical scanning resolution information.

The Moire-related information may include a Moire removal level input through the UI window and the elevating and determining may include determining the optical scanning resolution corresponding to the input Moire removal level.

According to another aspect, there is provided an image scanning method of an image scanning apparatus. The method may include: receiving selection of a Moire removing function for the image scanning apparatus; when the Moire removing function is selected, elevating and determining an optical scanning resolution thereof according to Moire-related information; performing a scanning operation according to the determined optical scanning resolution; performing filtering to remove a halftoning screen pattern from a scanned image scanned through the scanning operation; and down-sampling the filtered scanned image with a pre-input scanning resolution.

The Moire-related information may include the pre-input scanning resolution and the elevating and determining may include elevating the pre-input scanning resolution and determining the elevated scanning resolution to the optical scanning resolution.

The elevating and determining may include elevating the pre-input scanning resolution two times or more and determining the elevated scanning resolution to the optical scanning resolution.

The Moire-related information may include a halftoning frequency of a text input to the image scanning apparatus and the elevating and determining may include elevating a text resolution corresponding to the input halftoning frequency and determining the elevated text resolution to the optical scanning resolution.

The Moire-related information may include a kind of text input to the image scanning apparatus and the elevating and determining may include reading information for an optical scanning resolution corresponding to the input kind of text from a data base in which pieces of information for optical scanning resolutions set to be different from each other according to kinds of texts are stored and determining the optical scanning resolution corresponding to the read optical scanning resolution information.

The Moire-related information may include a Moire removal level input to image scanning apparatus and the elevating and determining may include determining the optical scanning resolution corresponding to the input Moire removal level.

According to another aspect, there is provided an image scanning method in a computer-readable recording medium in which a program code for executing an image scanning method of a host apparatus is stored. The method include: displaying a UI window for an image scanning apparatus; when a scanning resolution is input and a Moire removing function is selected, in the UI window, elevating and determining an optical scanning resolution of the image scanning apparatus according to Moire-related information; controlling the image scanning apparatus to perform a scanning operation according to the determined optical scanning resolution; receiving a scanned image scanned with the optical scanning resolution in the image scanning apparatus; performing filtering to remove a halftoning screen pattern from the received scanned image; and down-sampling the filtered scanned image with the input scanning resolution.

As described above, according to the various exemplary embodiments, it is possible to effectively remove scan Moire which can occur when a text printed with halftoning is scanned with a low resolution, using Moire-related information received from the user.

Additional aspects and advantages will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:
FIG. 1 is a view illustrating a text printed with halftoning and a scanned image in which the text printed with halftoning is scanned;
FIG. 2 is a block diagram illustrating a host apparatus according to an exemplary embodiment;
FIG. 3 is a detailed block diagram of the host apparatus of FIG. 2;
FIG. 4 is a block diagram illustrating an image scanning apparatus according to an exemplary embodiment;
FIG. 5 is a detailed block diagram of the image scanning apparatus of FIG. 4;
FIG. 6 is a view illustrating an image scanning system to remove Moire according to an exemplary embodiment;
FIGS. 7 to 10 are flowcharts illustrating image scanning methods of a host apparatus according to exemplary embodiments;
FIGS. 11 to 14 are flowcharts illustrating image scanning methods of an image scanning apparatus according to exemplary embodiments; and
FIG. 15 is a view illustrating an effect of application of a Moire removing method.

### DETAILED DESCRIPTION

Hereinafter, exemplary embodiments will be described in more detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

FIG. 2 is a block diagram illustrating a host apparatus according to an exemplary embodiment. Referring to FIG. 2, a host apparatus 200 includes a display unit 201, a communication interface unit 202, a filtering unit 203, a sampling unit 204, and a control unit 205.

The display unit 201 functions to displaying several operations of the host apparatus 200.

Specifically, the display unit 201 may display a UI window for the image scanning apparatus. The user may use various kinds of functions of the UI window displayed in the display unit 201 using a UI unit which will be described later. Moire-related information may be displayed in the UI window and include a scanning resolution, setting/non-setting of a Moire removing function, a halftoning frequency of a text, a kind of text, and a Moire removal level.

In addition, the display unit 201 may receive an image scanned in the image scanning apparatus and display the scanned image.

Here, the display unit 201 may be implemented with at least one of liquid crystal displays (LCDs), thin film transistor-liquid crystal displays (TFT-LCDs), flexible displays, organic light emitting diodes (OLEDs), and three-dimensional (3D) displays.

The communication interface unit 202 functions to connect the host apparatus 200 with the image scanning apparatus.

Specifically, the communication interface unit 202 may transmit a control signal according to the Moire-related information generated in the control unit 205, which will be described later, to the image scanning apparatus.

In addition, the communication interface unit 202 may receive a scanned image scanned with an optical scanning resolution in the image scanning apparatus from the image scanning apparatus.

The communication interface unit 202 may be formed to connect the host apparatus 200 to the image scanning apparatus. The communication interface unit 202 may connect the host apparatus to the image scanning apparatus in a wireless manner through an Internet network or in a wired manner. Alternatively, the communication interface unit 202 may connect the host apparatus to the image scanning apparatus using a universal serial bus (USB) port.

The filtering unit 203 performs low-pass filtering to remove a halftoning screen pattern from the scanned image received from the image scanning apparatus. Parameters such as a filter size, a filter coefficient, and a sigma of the filtering unit 203 may be applied with different values according to conditions such as the scanning resolution input by the user, a Moire removal level, or a real optical scanning resolution of the image scanning apparatus. The conditions may be stored with optimal values previously defined by experiments.

The filtering unit 203 may be a Gaussian filter. However, the filtering unit 203 is not limited thereto and any low-pass filter may be applied as the filtering unit.

The sampling unit 204 functions to down-sample the filtered scanned image by the filtering unit 203 with the scanning resolution input by the user. The down-sampling method of the sampling unit 204 may be determined by considering an image processing time and a degree of reduction in Moire.

The sampling unit 204 may use bilinear interpolation. However, the down-sampling method of the sampling unit is not limited thereto and any algorithm for down-sampling may be applied as the sampling method.

The control unit 205 controls an overall function of the host apparatus 200. That is, the control unit 205 controls the display unit 201, the communication unit 202, the filtering unit 203, and the sampling unit 204.

Specifically, the control unit 205 controls the display unit 201 to display the UI window for the image scanning apparatus when the user uses the image scanning apparatus.

The control unit 205 may control the overall function of the host apparatus 200 according to the user input input through a UI unit (not shown).

When Moire-related information is input or selected in the UI window, the control unit 205 may elevate and determine the optical scanning resolution of the image scanning resolution according to the Moire-related information. The Moire-related information may include a scanning resolution, setting/non-setting of Moire removing function, a halftoning frequency of a text, a kind of text, and a Moire removal level.

That is, when a scanning resolution (for example, 75 dpi, 100 dpi, 150 dpi, 200 dpi, and the like) is received from the user in the UI window displayed in the display unit 201 and the Moire removing function is selected, the control unit 205 may elevate and determine the optical scanning resolution of the image scanning apparatus.

When the Moire-related information input from the user is the scanning resolution and the Moire removing function selection, the control unit 205 may elevate the input scanning resolution and determine the elevated scanning resolution as the optical scanning resolution of the image scanning resolution.

Specifically, the control unit 205 may elevate the input scanning resolution two times or more and determine the elevated scanning resolution as the optical scanning resolution. The halftoning frequency of a print is typically about 85 lpi in a newspaper, about 133 lpi in a magazine, and about 175 lpi in a commercial print. To prevent Moire from occurring, the magazine or newspaper has to be scanned with a high optical scanning resolution of 300 dpi or more and the commercial print has to be scanned with a high optical scanning resolution of 600 dpi or more. When the user selects a scanning resolution of 150 dpi, Moire occurs in all scanned images for the newspaper, magazine, and commercial print. Therefore, the control unit 205 may determine the optical scanning resolution of the image scanning apparatus to 300 dpi or more, that is, two times or more the input scanning resolution of 150 dpi. At this time, Moire does not occur in the scanned images for the newspaper or the magazine. When the control unit 205 determines the optical scanning resolution to 360 dpi or more, Moire does not also occur in the scanned image for the commercial print.

When the Moire-related information received from the user is the scanning resolution, the Moire removing function selection, and the halftoning frequency of a text, the control unit 205 may elevate a text resolution corresponding to the input halftoning frequency and determine the elevated text resolution to the optical scanning resolution of the image scanning apparatus. The control unit 205 may elevate the text resolution two times or more and determine the elevated text resolution to the optical scanning resolution of the image scanning apparatus.

A user may know general halftoning frequencies of prints, that is, 85 lpi of the newspaper, 133 lpi of the magazine, and 175 lpi of the commercial print. In this case, the user may input the halftoning frequency of a text using the UI window displayed in the display unit 201. In this case, to prevent Moire from occurring, the control unit 205 may determine the optical scanning resolution to 170 dpi in the newspaper, 266 dpi in the magazine, and 360 dpi in the commercial print.

When the halftoning frequency of a text is received from the user, it is possible to calculate more accurate optical scanning resolution to remove Moire as compared with when the optical scanning resolution is determined using the scanning resolution as described above.

When the Moire-related information received from the user is the scanning resolution, the Moire removing function selection, and a kind of text, the control unit 205 may read an optical scanning resolution corresponding to the input kind of text from a data base in which optical scanning resolutions set to be different from each other according to kinds of texts are stored and determine the optical scanning resolution of the image scanning apparatus corresponding to the read optical scanning resolution.

The user inputs whether the kind of text is the magazine, the newspaper, or the commercial print using the UI window displayed in the display unit 201. In this case, a storage unit (not shown) may store the optical scanning resolutions set to be different from each other according to the kinds of texts. That is, the storage unit may store optical scanning resolutions, for example, 170 dpi or more for the newspaper, 266 dpi or more for the magazine, and 360 dpi or more for the commercial print to prevent Moire from occurring and the control unit 205 may read an optical scanning resolution corresponding to the kind of text from the storage unit and determine the optical scanning resolution of the image scanning apparatus corresponding to the read optical scanning resolution.

When the kind of text is received from the user, it is possible to calculate the more accurate optical scanning resolution to remove Moire as compared with when the optical scanning resolution is determined using the scanning resolution as described above.

When the Moire-related information received from the user is the scanning resolution, the Moire removing function selection, and the Moire removal level, the control unit 205 may determine the optical scan resolution corresponding to the input Moire removal levei.

Specifically, the user may input the Moire removal level using the UI window displayed in the display unit 201. In this case, optical scanning resolutions corresponding to Moire removal levels are stored in the storage unit (not shown). The control unit 205 may determine the optical scanning resolution of the image scanning apparatus using the optical scanning resolution corresponding to the Moire removal level.

Alternatively, the control unit 205 may determine the lowest optical scanning resolution scannable in the image scanning apparatus among the optical scanning resolutions determined to minimize a scanning time and remove Moire using minimum resources.

Specifically, an example in which the optical scanning resolutions of the image scanning apparatus are 300 dpi and 600 dpi will be described. In this case, when the halftoning frequency is 130 lpi, the control unit 205 may determine the optical scanning resolution not to 600 dpi but to 300 dpi.

When the scanning resolution input from the user is not low, the control unit 205 may determine the optical scanning resolution of the image scanning apparatus to the input scanning resolution according to the scanning resolution. In this case, since the input scanning resolution is high sufficient to remove Moire, Moire does not occur even when the optical scanning resolution of the image scanning apparatus is set to the scanning resolution input from the user. Here, the reference for the low resolution may be set by the user or determined by the pre-stored value. For example, the control unit 205 may determine the scanning resolution of 150 dpi or less to the low resolution.

The control unit 205 may determine the scanning resolution received from the user to the optical scanning resolution of the image scanning apparatus when the Moire removing function is not selected using the UI window displayed in the display unit 201.

In addition, the control unit 205 may control the image scanning apparatus to perform a scanning operation according to the determined optical scanning resolution.

Specifically, the control unit 205 may transmit a control signal, which allows the scanning operation to be performed according to the determined optical scanning resolution, to the image scanning apparatus through the communication interface unit 202.

When a scanned image is received from the image scanning apparatus, the control unit 205 may control the filtering unit 203 to perform low-pass filtering for removing a halftoning screen pattern from the received scanned image.

The control unit 205 may control the sampling unit 204 to down-sample the scanned imaged filtered in the filtering unit 203 with the scanning resolution input from the user.

As described above, according to the various exemplary embodiments, it is possible to effectively remove Moire, which can occur when a text with halftoning is scanned with a low resolution, using the Moire-related information received from the user.

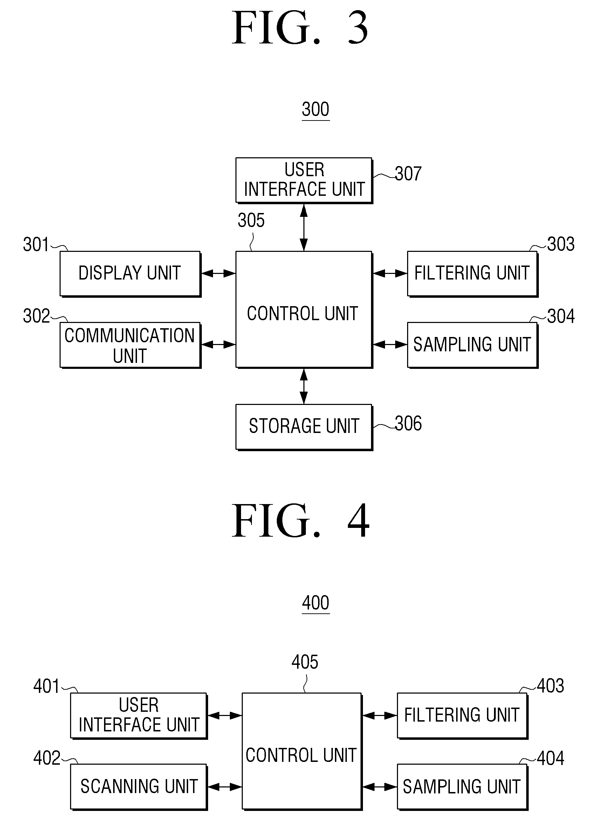

FIG. 3 is a detailed block diagram of the host apparatus of FIG. 2. Referring to FIG. 3, the host apparatus include a display unit 301, a communication unit 302, a filtering unit 303, a sampling unit 304, a control unit 305, a storage unit 306, and a UI unit 307. Detailed description for the same components as those illustrated in FIG. 2 among the components illustrated in FIG. 3 will be omitted.

The storage unit 306 stores various programs and data necessary to drive the host apparatus 300 and the image scanning apparatus (400 of FIG. 4).

Specifically, the storage unit 306 may store optical scanning resolutions corresponding to kinds of text input from the user.

In addition, the storage unit 306 may store optical scanning resolutions corresponding to Moire removal levels input from the user.

The storage unit 306 may be implemented with an embedded type storage device or an attachable/detachable type storage device.

The UI unit 307 may allow the user to set or select functions supported in the host apparatus 300.

The user may select the Moire-related information in the UI window displayed in the display unit 301 using the UI unit 307.

The UI unit 307 may be implemented with an apparatus in which an input and an output are simultaneously realized such as a touch pad. Alternatively, the UI unit may be implemented by combining an input apparatus such as a mouse or a keyboard and a display apparatus such as a cathode-ray tube (CRT) monitor, a liquid crystal display (LCD) monitor, a light-emitting diode (LED) monitor.

FIG. 4 is a block diagram of an image scanning apparatus according to an exemplary embodiment. Referring to FIG. 4, an image processing apparatus 400 include a UI unit 401, a scanning unit 402, a filtering unit 403, a sampling unit 404, and a control unit 405.

The UI unit 401 allows the user to set or select various functions supported in the image scanning apparatus 400.

The user may select the Moire-related information in the UI window displayed in the display unit (not shown) using the UI unit 401 of the image scanning apparatus. Moire-related information may include an input scanning resolution, selection/non-election (setting/non-setting??) of a Moire removing function, a halftoning frequency of a text, a kind of text, and a Moire removal level.

The UI unit 401 may be implemented with an apparatus in which an input and an output are simultaneously realized such as a touch pad. Alternatively, the UI unit may be implemented by combining an input apparatus such as a mouse or a keyboard and a display apparatus such as a CRT monitor, a LCD monitor, and an LED monitor.

The scanning unit 402 reads out a text. Specifically, the scanning unit 402 includes a lens unit (not shown) which forms light reflected from the text on an image sensor and read out image information of the text from the light formed on an image sensor.

Here, the image sensor of the scanning unit 402 may be implemented with a complementary metal oxide semiconductor (CMOS) image sensor (CIS) or a charge-coupled device (CCD).

The filtering unit 403 performs low-pass filtering to remove a halftoning screen pattern from the scanned image scanned in the scanning unit 402. Parameters such as a filter size, a filter coefficient, and a sigma of the filtering unit 403 may be applied to be different from each other according to conditions such as the scanning resolution and Moire removal level input by the user and a real optical scanning resolution of the image scanning apparatus. Alternatively, the parameters may be stored with optimal values previously defined by experiments.

The filtering unit 403 may include a Gaussian filter. However, the filtering unit 403 is not limited thereto and any low-pass filter may be applied as the filtering unit 403.

The sampling unit 404 down-samples the scanned image filtered in the filtering unit 403 with the scanning resolution input from the user. A down-sampling method of the sampling unit 404 may be determined by considering an image processing time and a degree of reduction in Moire.

The sampling unit 404 may use bilinear interpolation. However, the down-sampling method of the sampling unit 404 is not limited thereto and any algorithm for down-sampling may b applied to the down-sampling method of the sampling unit 404.

Although FIG. 4 has illustrated that the filtering unit 403 and the sampling unit 404 is provided in the image scanning apparatus 400 together, the filtering unit 403 or the sampling unit 404 may be provided in the host apparatus. In this case, it should be understood in the skilled art that the filtering unit 403 or the sampling unit 404 may be configured so that under control of the control unit 405, which will be described later, an optical scanning resolution is determined, a scanned image is generated in the scanning unit 402 with the determined optical scanning resolution, and the scanned image is filtered or down-sampled in the host apparatus.

The control unit 405 controls an overall function of the image scanning apparatus 400. That is, the control unit 405 controls the UI unit 401, the scanning unit 402, the filtering unit 403, and the sampling unit 404.

Specifically, the control unit 405 controls the overall function of the image scanning apparatus 400 according to the user input input through the UI unit 401.

That is, the control unit 405 may elevate and determine the optical scanning resolution of the image scanning apparatus according to Moire-related information when the Moire-related information is input or selected in the UI window through the UI unit 401. Here, the Moire-related information may include an input scanning resolution, setting/non-setting of a Moire removing function, a halftoning frequency of a text, a kind of a text, and a Moire removal level.

When the scanning resolution (for example, 75 dpi, 100 dpi, 150 dpi, 200 dpi, and the like) is received through the UI unit 401 and the Moire removing function is selected through the UI unit 401, the control unit 405 may elevate and determine the optical scanning resolution of the image scanning apparatus.

When the Moire-related information received from the user is the Moire remove function selection, the control unit 405 may elevate the input scanning resolution and determine the elevated scanning resolution to the optical scanning resolution of the image scanning apparatus 400.

In addition, the control unit 405 may elevate the input scanning resolution two times or more and determine the elevated scanning resolution to the optical scanning resolution.

When the Moire-related information received from the user is the Moire removing function selection and the halftoning frequency of a text, the control unit 405 may elevate a text resolution corresponding to the input halftoning frequency and determine the elevated text resolution to the optical scanning resolution of the image scanning apparatus. In addition, the control unit 405 may elevate the text resolution two times or more and determine the elevated text resolution to the optical scanning resolution.

When determining the optical scanning resolution using the halftoning frequency received from the user, it is possible to calculate the more accurate optical scanning resolution for removing Moire as compared with when the optical scanning resolution is determined using the scanning resolution as described above.

When the Moire-related information received from the user is the Moire removing function selection and the kind of text, the control unit 405 may read an optical scanning resolution corresponding to the input kind of text from a database in which optical scanning resolutions set to be different from each other according to kinds of texts are stored and determine the optical scanning resolution of the image scanning apparatus corresponding to the read optical scanning resolution.

When determining the optical scanning resolution using the kind of text received from the user, it is possible to calculate the more accurate optical scanning resolution for removing Moire as compared with when the optical scanning resolution is determined using the scanning resolution as described above.

When the Moire-related information received from the user is the Moire removing function selection and the Moire removal level, the control unit 405 may determine the optical scanning resolution corresponding to the input Moire removal level.

The user may input the Moire removal level through the UI unit 401 of the image scanning apparatus 400. In this case, the storage unit (not shown) may store optical scanning resolutions corresponding to Moire removal levels. The control unit 405 may determine the optical scanning resolution of the image scanning apparatus using the optical scanning resolutions corresponding to the Moire removal levels.

In addition, to minimize a scanning time and remove Moire with a minimum resource, the control unit 405 may determine the lowest optical scanning resolution scannable in the image scanning apparatus among the determined optical scanning resolutions.

When the input scanning resolution is not low, the control unit 405 may determine the input scanning resolution to the optical scanning resolution of the image scanning apparatus. In this case, since the input scanning resolution is high sufficient to remove Moire, Moire may not occur even when the scanning resolution input from the user is determined as the optical scanning resolution of the image scanning apparatus 400. Here, the reference for the low resolution may be determined by setting of the user or by the pre-stored value. For example, the control unit 405 may determine the scanning resolution of 150 dpi or less to a low resolution.

The control unit 405 may determine the input scanning resolution to the optical scanning resolution of the image scanning apparatus when the Moire removing function is not selected through the UI unit 401.

The control unit 405 may control the scanning unit 402 to perform a scanning operation based on the determined optical canning resolution.

In addition, the control unit 405 may control the filtering unit 403 to perform low-pass filtering for removing a halftoning screen pattern from the scanned image scanned in the scanning unit 402.

The control unit 405 may control the sampling unit 404 to down-sample the scanned image filtered in the filtering unit 403 with the scanning resolution input through the UI unit 401.

The control unit 405 may control the communication interface unit (not shown) to transmit the down-sampled scanned image to the host apparatus.

As described above, according to the various exemplary embodiments, it is possible to effectively remove Moire which can occur when a text with halftoning is scanned with a low resolution.

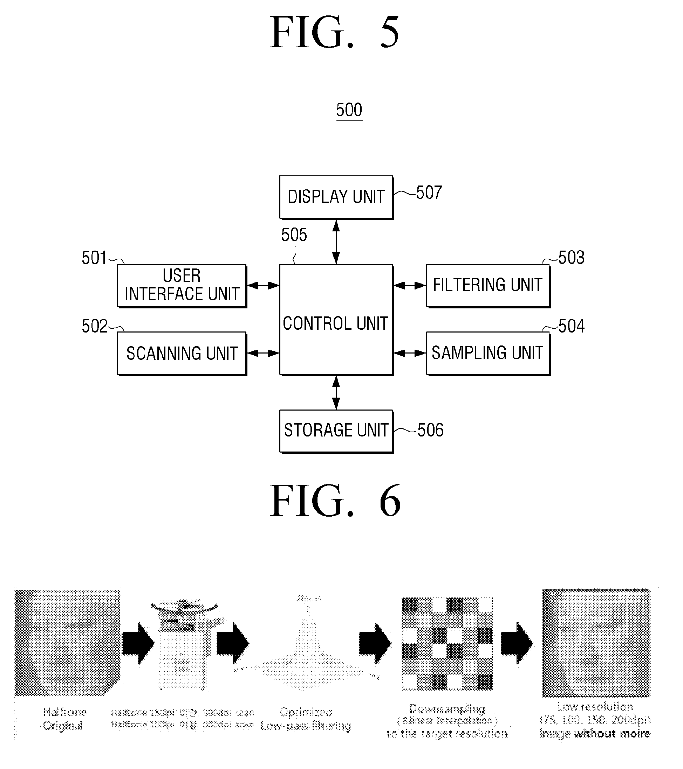

FIG. 5 is a detailed block diagram illustrating an image scanning apparatus of FIG. 4. Referring to FIG. 5, an image scanning apparatus 500 includes a UI unit 501, a scanning unit 502, a filtering unit 503, a sampling unit 504, a control unit 505, a storage unit 506, and a display unit 507. Detailed description of the same components as those illustrated in FIG. 4 in the image scanning apparatus illustrated in FIG. 5 will be omitted.

The storage unit 506 stores various programs and data necessary to drive the image scanning apparatus 500.

Specifically, the storage unit 506 may store optical scanning resolutions corresponding to kinds of texts input from the user.

In addition, the storage unit 506 may store optical scanning resolutions corresponding to Moire removal levels input from the user.

Here, the storage unit 506 may implemented with a storage device embedded therein such as a hard disc drive (HDD) or an attachable/detachable storage device such as a USB memory.

The display unit 507 may display a UI window for the image scanning apparatus 500. The user may use various functions of the UI window displayed in the display unit 507 using the UI unit 501.

In addition, the display unit 507 may display an image scanned in the image scanning apparatus 500.

Here, the display unit 507 may be implemented with any one of liquid crystal displays (LCDs), thin film transistor-liquid crystal displays (TFT-LCDs), organic light-emitting diodes (OLEDs), flexible displays, and three-dimensional (3D) displays.

FIG. 6 is a view illustrating an image scanning system for removing Moire according to an exemplary embodiment.

According to FIG. 6, it can seen that to remove Moire of a text printed with halftoning, the image scanning system scans a text with halftoning of 150 lpi or less with a scanning resolution of 300 dpi and a text with halftoning of below 150 lpi with a scanning resolution of 600 dpi. Subsequently, the scanned image is low-pass filtered and then down-sampled so that the Moire-removed scanned image to be viewed to the user is displayed.

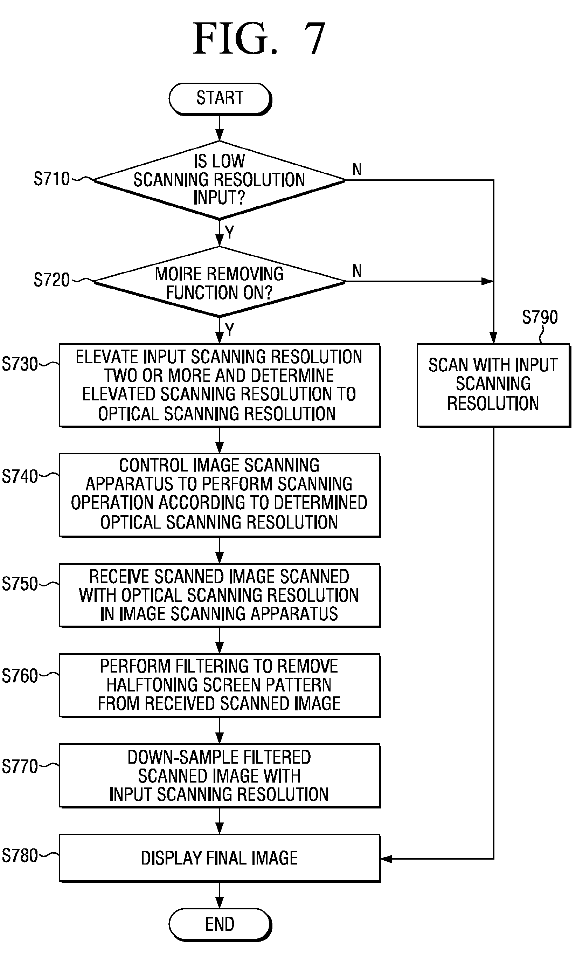

FIGS. 7 to 10 are flowcharts illustrating image scanning methods of a host apparatus according to an exemplary embodiment.

Referring to FIG. 7, a host apparatus determines whether or not a low scanning resolution is input (S71 0). When it is determined that the input scanning resolution is not low (N in step S710), the host apparatus determines the input scanning resolution to an optical scanning resolution of an image scanning apparatus (S790). When it is determined that the input scanning resolution is low (Y in step S710), the host apparatus determines whether or not a Moire removing function is selected (S720). When it is determined that the Moire removing function is not selected (N in step S720), the host apparatus determines the input scanning resolution to the optical scanning resolution of the image scanning apparatus (S790). When it is determined that the Moire removing function is selected (Y in step S720), the host apparatus elevates the input scanning resolution two times or more and determines the elevated scanning resolution to the optical scanning resolution of the image scanning apparatus (S730). Then, the host apparatus controls the image scanning apparatus to perform a scanning operation according to the determined optical scanning resolution (S740). The host apparatus receives a scanned image scanned with the optical scanning resolution in the image scanning apparatus (S750). The host apparatus performs filtering on the received scanned image to remove a halftoning screen pattern from the received scanned image (S760). The host apparatus down-samples the filtered scanned image with the input scanning resolution (S770) and displays the down-sampled image (S780).

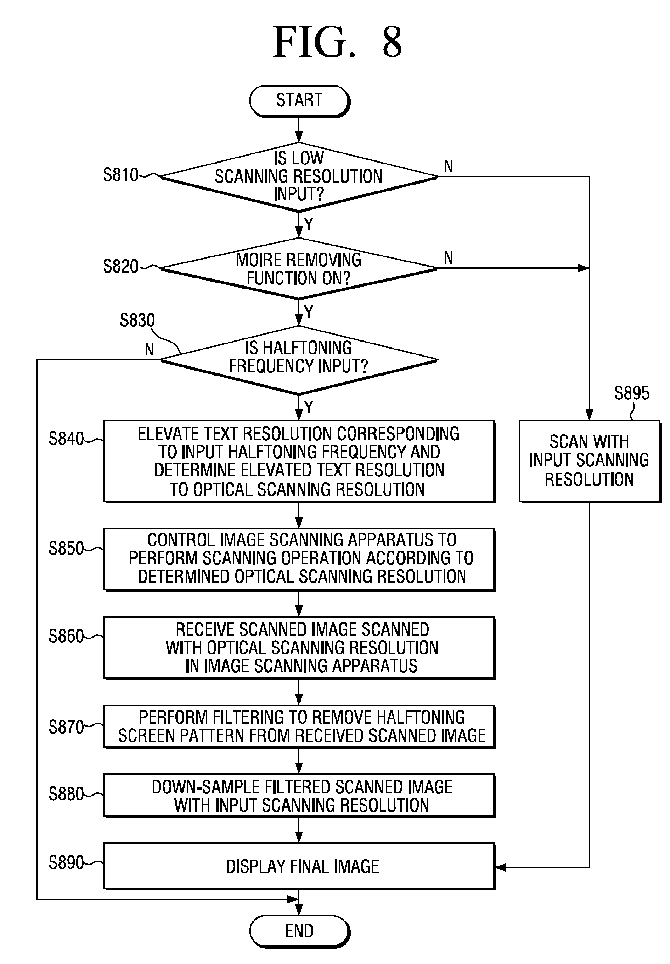

Referring to FIG. 8, a host apparatus determines whether or not a low scanning resolution is input (S810). When it is determined that the input scanning resolution is not low (N in step S810), the host apparatus determines the input scanning resolution to an optical scanning resolution of an image scanning apparatus (S895). When it is determined that the input scanning resolution is low (Y in step S810), the host apparatus determines whether or not a Moire removing function is selected (S820). When it is determined that the Moire removing function is not selected (N in step S820), the host apparatus determines the input scanning resolution to the optical scanning resolution of the image scanning apparatus (S895). When it is determined that the Moire removing function is selected (Y in step S820), the host apparatus determines whether or not a halftoning frequency is input (S830). When it is determined that the halftoning frequency is not input (N in step S830), the host apparatus elevates the input scanning resolution two times or more and determines the elevated scanning resolution to the optical scanning resolution of the image scanning apparatus as described in FIG. 7 and subsequently the host apparatus performs the following processes illustrated in FIG. 7. When it is determined that the halftoning frequency is input (Y in step S830), the host apparatus elevates a text resolution corresponding to the input halftoning frequency and determines the elevated text resolution to the optical scanning resolution (S840). The host apparatus controls the image scanning apparatus to perform a scanning operation according to the determined optical scanning resolution (S850). Then, the host apparatus receives the scanned image scanned with the optical scanning resolution in the image scanning apparatus (S860) and performs filtering on the received scanned image to remove a halftoning screen pattern from the received scanned image (S870). The host apparatus down-samples the filtered scanned image with the input scanning resolution (S880) and displays the down-sampled image (S890).

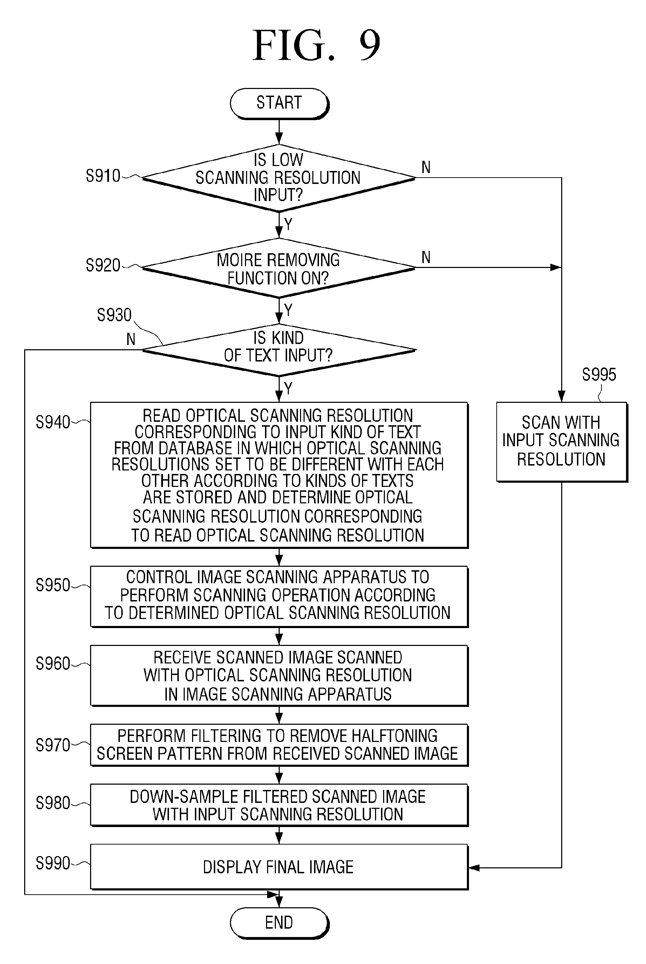

Referring to FIG. 9, a host apparatus determines whether or not a low scanning resolution is input (S91 0). When it is determined that the input scanning resolution is not low (N in step S910), the host apparatus determines the input scanning resolution to an optical scanning resolution of an image scanning apparatus (S995). When it is determined that the input scanning resolution is low (Y in step S910), the host apparatus determines whether or not a Moire removing function is selected (S920). When it is determined that the Moire removing function is not selected (N in step S920), the host apparatus determines the input scanning resolution to the optical scanning resolution of the image scanning apparatus (S995). When it is determined that the Moire removing function is selected (Y in step S920), the host apparatus determines whether or not a kind of text is input (S930). When it is determined that the kind of text is not input (N in step S930), the host apparatus elevates the input scanning resolution two times or more and determines the elevated scanning resolution to the optical scanning resolution of the image scanning apparatus as described in FIG. 7 and subsequently the host apparatus performs the following processes illustrated in FIG. 7. When it is determined that the kind of text is input (Y in step S930), the host apparatus reads an optical scanning resolution corresponding to the input kind of text from a database in which optical scanning resolutions set to be different from each other according to kinds of texts are stored and determines the read optical scanning resolution to the optical scanning resolution of the image scanning apparatus (S940). The host apparatus controls the image scanning apparatus to perform a scanning operation according to the determined optical scanning resolution (S950). Then, the host apparatus receives a scanned image scanned with the optical scanning resolution in the image scanning apparatus (S960) and performs filtering on the received scanned image to remove a halftoning screen pattern from the received scanned image (S970). The host apparatus down-samples the filtered scanned image with the input scanning resolution (S980) and displays the down-sampled image (S990).

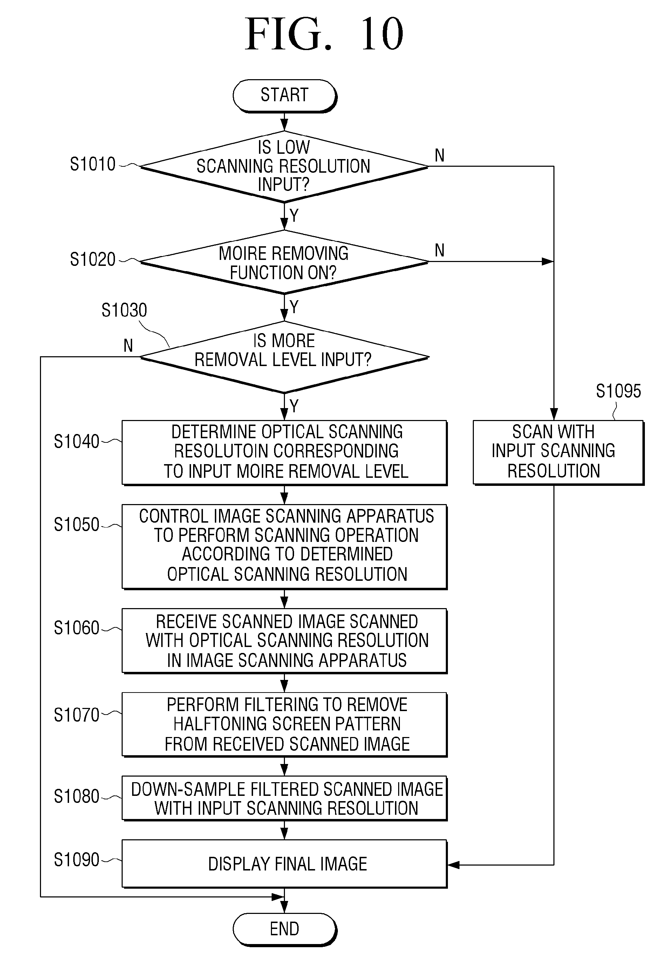

Referring to FIG. 10, a host apparatus determines whether or not a low scanning resolution is input (S1010). When it is determined that the input scanning resolution is not low (N in step S1010), the host apparatus determines the input scanning resolution to an optical scanning resolution of an image scanning apparatus (S1095). When it is determined that the input scanning resolution is low (Y in step S1010), the host apparatus determines whether or not a Moire removing function is selected (S1020). When it is determined that the Moire removing function is not selected (N in step S1020), the host apparatus determines the input scanning resolution to the optical scanning resolution of the image scanning apparatus (S1095). When the Moire removing function is selected (Y in step S1020), the host apparatus determines whether or not a Moire removal level is input (S1030). When it is determined that the Moire removal level is not input (N in step S1030), the host apparatus elevates the input scanning resolution two times or more and determines the elevated scanning resolution to the optical scanning resolution of the image scanning apparatus as described in FIG. 7 and subsequently the host apparatus performs the following processes illustrated in FIG. 7. When it is determined that the Moire removal level is input (Y in step S1030), the host apparatus determines the optical scanning resolution corresponding to the input Moire removal level (S1040). The host apparatus controls the image scanning apparatus to perform a scanning operation according to the determined optical scanning resolution (S1050). Then, the host apparatus receives a scanned image scanned with the optical scanning resolution in the image scanning apparatus (S1060) and performs filtering on the received scanned image to remove a halftoning screen pattern from the received scanned image (S1070). The host apparatus down-samples the filtered scanned image with the input scanning resolution (S1080) and displays the down-sampled image (S1090).

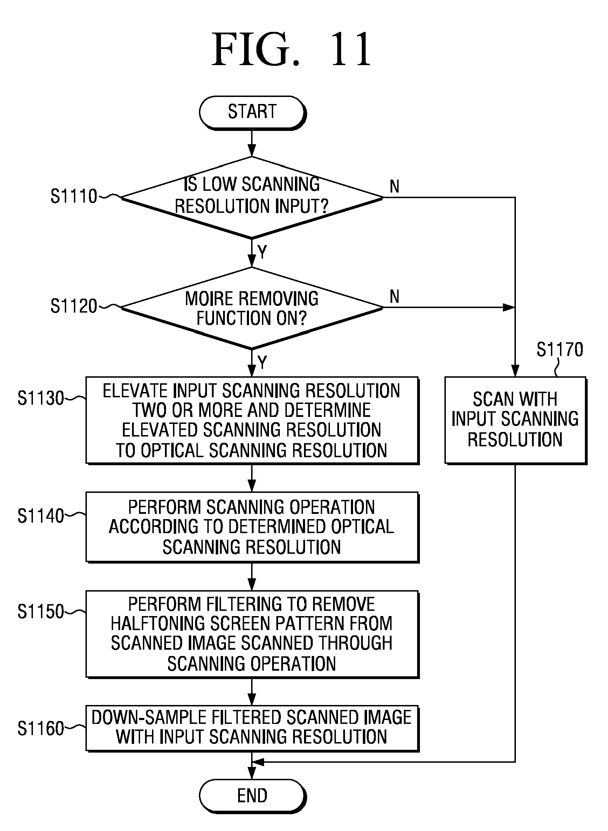

FIGS. 11 to 14 are flowcharts illustrating image scanning methods of an image scanning apparatus according to an exemplary embodiment.

Referring to FIG. 11, an image scanning apparatus determines whether or not a low scanning resolution is input (S1110). When it is determined that the input scanning resolution is not low (N in step S1110), the image scanning apparatus determines the input scanning resolution to an optical scanning resolution thereof (S1170). When it is determined that the input scanning resolution is low (Y in step S1110), the image scanning apparatus determines whether or not a Moire removing function is selected (S1120). When it is determined that the Moire removing function is not selected (N in step S1120), the image scanning apparatus determines the input scanning resolution to the optical scanning resolution of the image scanning apparatus (S1170). When it is determined that the Moire removing function is selected (Y in step S1120), the image scanning apparatus elevates the input scanning resolution two times or more and determines the elevated scanning resolution to the optical scanning resolution (S1130). Then, the image scanning apparatus performs a scanning operation according to the determined optical scanning resolution (S1140). The image scanning apparatus performs filtering on the scanned image scanned through the scanning operation to remove a halftoning screen pattern from the scanned image (S1150). The image scanning apparatus down-samples the filtered scanned image with the input scanning resolution (S1160).

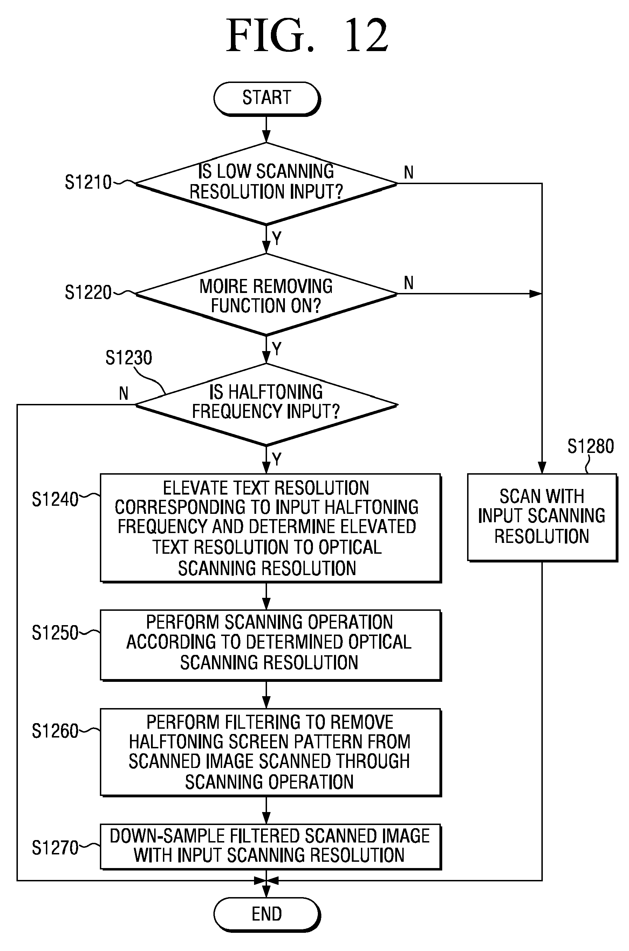

Referring to FIG. 12, an image scanning apparatus determines whether or not a low scanning resolution is input (S1210). When it is determined that the input scanning resolution is not low (N in step S1210), the image scanning apparatus determines the input scanning resolution to an optical scanning resolution thereof (S1280). When it is determined that the input scanning resolution is low (Y in step S1210), the image scanning apparatus determines whether or not a Moire removing function is selected (S1220). When it is determined that the Moire removing function is not selected (N in step S1220), the image scanning apparatus determines the input scanning resolution to the optical scanning resolution thereof (S1280). When it is determined that the Moire removing function is selected (Y in step S1220), the image scanning apparatus determines whether or not a halftoning frequency is input (S1230). When it is determined that the halftoning frequency of a text is not input (N in step S1230), the image scanning apparatus elevates the input scanning resolution two times or more and determines the elevated scanning resolution to the optical scanning resolution thereof as described in FIG. 11 and subsequently the image scanning apparatus performs the following processes illustrated in FIG. 12. When it is determined that the halftoning frequency is input (Y in step S1230), the image scanning apparatus elevates a text resolution corresponding to the input halftoning frequency and determines the elevated text resolution to the optical scanning resolution (S1240). The image scanning apparatus performs a scanning operation according to the determined optical scanning resolution (S1250). Then, the image scanning apparatus performs filtering on the scanned image scanned through the scanning operation to remove a halftoning screen pattern from the scanned image (S1260). The image scanning apparatus down-samples the filtered scanned image with the input scanning resolution (S1270).

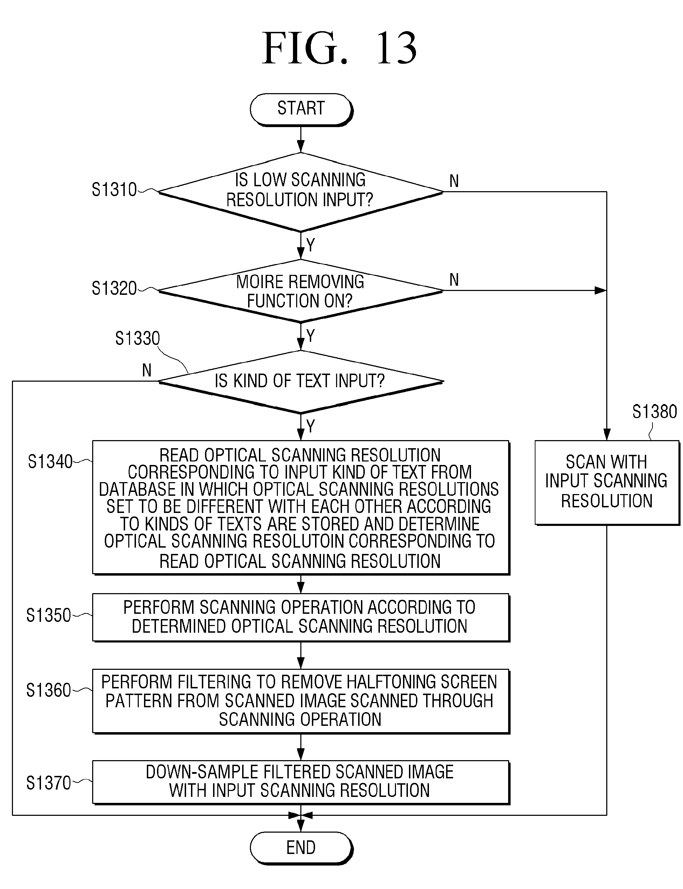

Referring to FIG. 13, an image scanning apparatus determines whether or not a low scanning resolution is input (S1310). When it is determined that the input scanning resolution is not low (N in step S1310), the image scanning apparatus determines the input scanning resolution to an optical scanning resolution thereof (S1380). When it is determined that the input scanning resolution is low (Y in step S1310), the image scanning apparatus determines whether or not a Moire removing function is selected (S1320). When it is determined that the Moire removing function is not selected (N in step S1320), the image scanning apparatus determines the input scanning resolution to the optical scanning resolution thereof (S1380). When it is determined that the Moire removing function is selected (Y in step S1320), the image scanning apparatus determines whether or not a kind of text is input (S1330). When it is determined that the kind of text is not input (N in step S1330), the image scanning apparatus elevates the input scanning resolution two times or more and determines the elevated scanning resolution to the optical scanning resolution thereof as described in FIG. 11 and subsequently the image scanning apparatus performs the following processes illustrated in FIG. 11. When it is determined that the kind of text is input (Y in step S1330), the image scanning apparatus reads an optical scanning resolution corresponding to the input kind of text from a database in which optical scanning resolutions set to be different from each other according to kinds of texts are stored and determines the optical scanning resolution thereof corresponding to the read optical scanning resolution (S1340). The image scanning apparatus performs a scanning operation according to the determined optical scanning resolution (S1350). Then, the image scanning apparatus performs filtering on the scanned image scanned through the scanning operation to remove a halftoning screen pattern from the scanned image (S1360). The image scanning apparatus down-samples the filtered scanned image with the input scanning resolution (S1370).

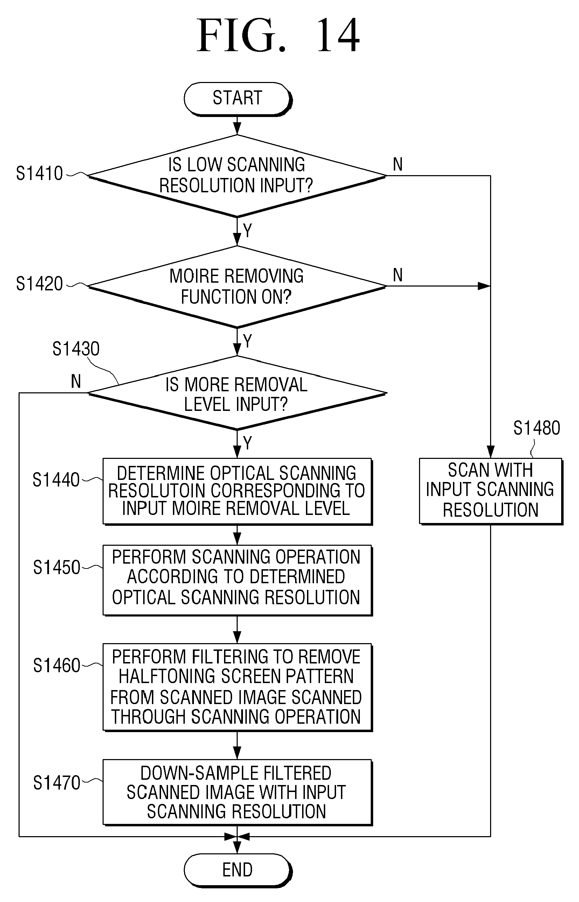

Referring to FIG. 14, an image scanning apparatus determines whether or not a low scanning resolution is input (S1410). When it is determined that the input scanning resolution is not low (N in step S1410), the image scanning apparatus determines the input scanning resolution to an optical scanning resolution thereof (S1480). When it is determined that the input scanning resolution is low (Y in step S1410), the image scanning apparatus determines whether or not a Moire removing function is selected (S1420). When it is determined that the Moire removing function is not selected (N in step S1420), the image scanning apparatus determines the input scanning resolution to the optical scanning resolution thereof (S1480). When the Moire removing function is selected (Y in step S1420), the image scanning apparatus determines whether or not a Moire removal level is input (S1430). When it is determined that the Moire removal level is not input (N in step S1430), the image scanning apparatus elevates the input scanning resolution two times or more and determines the elevated scanning resolution to the optical scanning resolution thereof as described in FIG. 11 and subsequently the image scanning apparatus performs the following processes illustrated in FIG. 11. When it is determined that the kind of text is input (Y in step S1430), the image scanning apparatus determines the optical scanning resolution corresponding to the input Moire removal level (S1440). The image scanning apparatus performs a scanning operation according to the determined optical scanning resolution (S1450). Then, the image scanning apparatus performs filtering on the scanned image scanned through the scanning operation to remove a halftoning screen pattern from the scanned image (S1460). The image scanning apparatus down-samples the filtered scanned image with the input scanning resolution (S1470).

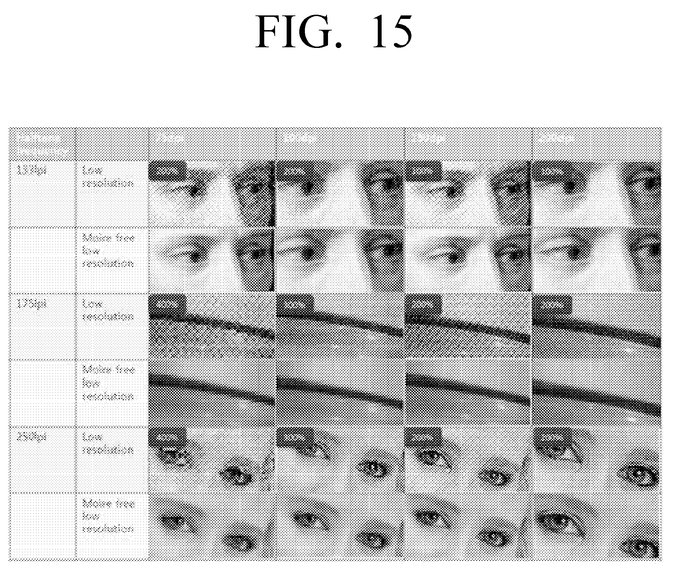

FIG. 15 is a view illustrating an effect for application of a Moire removal method.

As shown in FIG. 15, it can be seen that scanned images (with More-free low resolution) to which the Moire removal methods are applied according to the various exemplary embodiments are images with high quality as compared with images (with low resolution) to which the Moire removal methods are not applied. That is, it can be seen from FIG. 15 that the Moire-free scanned images are obtained.

The image scanning methods of a host apparatus according to the above-described various exemplary embodiments may be implemented by a program code which is stored in various kinds of recording media and executed by a central processing unit (CPU) or the like.

Specifically, the code for executing the above-described methods may be stored in various kinds of terminal-readable recording media such as random access memories (ROMs), flash memories, read only memories (ROMs), erasable programmable ROMs (EPROMs), electronically erasable and programmable ROMs (EEPROMs), registers, hard discs, removable discs, memory cards, universal serial bus (USB) memories, and compact disc-ROMs (CD-ROMs).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A host apparatus connected to an image scanning apparatus, the host apparatus comprising:
a display unit configured to display a user interface (UI) window for the image scanning apparatus;
a control unit configured to elevate and determine an optical scanning resolution of the image scanning apparatus according to Moire-related information when a scanning resolution is input and a Moire removing function is selected, in the UI window, and control the image scanning apparatus to perform a scanning operation according to the determined optical scanning resolution;
a communication interface unit configured to receive a scanned image scanned with the optical scanning resolution in the image scanning apparatus; and
a sampling unit configured to down-sample the scanned image with the input scanning resolution.

2. The host apparatus as claimed in claim 1, further comprising a filtering unit configured to remove a halftoning screen pattern from the received scanned image,
wherein the sampling unit down-samples the scanned image filtered by the filtering unit with the input scanning resolution.

3. The host apparatus as claimed in claim 1 or 2, wherein the Moire-related information includes the scanning resolution input through the UI window,
the control unit elevates the input scanning resolution and determines the elevated scanning resolution to the optical scanning resolution.

4. The host apparatus as claimed in claim 3, wherein the control unit elevates the input scanning resolution two times or more and determines the elevated scanning resolution to the optical scanning resolution.

5. The host apparatus as claimed in claim 1 or 2, wherein the Moire-related information includes a halftoning frequency of a text input through the UI window,
the control unit elevates a text resolution corresponding to the input halftoning frequency and determines the elevated text resolution to the optical scanning resolution.

6. The host apparatus as claimed in claim 1 or 2, wherein the Moire-related information includes a kind of text input through the UI window,
the control unit reads information for an optical scanning resolution corresponding to the input kind of text from a data base in which pieces of information for optical scanning resolutions set to be different from each other according to kinds of texts are stored and determines the optical scanning resolution according to the read optical scanning resolution information.

7. The host apparatus as claimed in claim 1 or 2, wherein the Moire-related information includes a Moire removal level input through the UI window,
the control unit determines the optical scanning resolution corresponding to the input Moire removal level.

8. An image scanning apparatus, comprising:
a user interface (UI) unit configured to allow a Moire removing function for the image scanning apparatus to be selected;
a control unit configured to elevate and determine an optical scanning resolution thereof according to Moire-related information when the Moire removing function is selected;
a scanning unit configured to perform a scanning operation according to the determined optical scanning resolution;
a sampling unit configured to down-sample a scanned image scanned in the scanning unit with a pre-input scanning resolution; and
a storage unit configured to store the down-sampled scanned image.

9. The image scanning apparatus as claimed in claim 8, further comprising a filtering unit configured to remove a halftoning screen pattern from the scanned image scanned in the scanning unit,
wherein the sampling unit down-samples the scanned image filtered by the filtering unit with the pre-input scanning resolution.

10. The image scanning apparatus as claimed in claim 8 or 9, wherein the Moire-related information includes the pre-input scanning resolution,
the control unit elevates the pre-input scanning resolution and determines the elevated scanning resolution to the optical scanning resolution.

11. The image scanning apparatus as claimed in claim 10, wherein the control unit elevates the pre-input scanning resolution two times or more and determines the elevated scanning resolution to the optical scanning resolution.

12. The image scanning apparatus as claimed in claim 8 or 9, wherein the Moire-related information includes a halftoning frequency of a text input through the UI unit,
the control unit elevates a text resolution corresponding to the input halftoning frequency and determines the elevated text resolution to the optical scanning resolution.

13. The image scanning apparatus as claimed in claim 8 or 9, wherein the Moire-related information includes a kind of text input through the UI unit,
the control unit read information for an optical scanning resolution corresponding to the input kind of text from a data base in which pieces of information for optical scanning resolutions set to be different from each other according to kinds of texts are stored and determines the optical scanning resolution according to the read optical scanning resolution information.

14. The image scanning apparatus as claimed in claim 8 or 9, wherein the Moire-related information includes a Moire removal level input through the UI unit,
the control unit determines the optical scanning resolution corresponding to the input Moire removal level.

15. The image scanning apparatus as claimed in any one of claims 8 to 14, wherein the storage unit is a hard disc drive (HDD) embedded in the image scanning apparatus or a universal serial bus (USB) memory separatable from the image scanning apparatus.
